# EUROPÄISCHE PATENTSCHRIFT

(11) **EP 2 767 964 B1**
(45) Veröffentlichungstag und Bekanntmachung des Hinweises auf die Patenterteilung: **26.11.2014**
(21) Anmeldenummer: 13155206.9
(22) Anmeldetag: 14.02.2013
(51) Int. Cl.: G08G 1/017

(54) **Vorrichtung zur Fahrzeugvermessung**
Device for vehicle measurement
Dispositif de mesure de véhicule

(43) Veröffentlichungstag der Anmeldung: 20.08.2014
(73) Patentinhaber: Kapsch TrafficCom AG, 1120 Wien (AT)
(72) Erfinder: Loschmidt, Patrick, 2380 Perchtoldsdorf (AT)
(74) Vertreter: Weiser, Andreas

(56) Entgegenhaltungen:
- EP-A1- 2 204 788

## Beschreibung

Die vorliegende Erfindung betrifft eine Vorrichtung zur Vermessung eines Fahrzeugs auf einer Fahrbahn.

Das Vermessen von Fahrzeugen ist insbesondere zum Feststellen der Eignung bzw. Berechtigung der Benutzung eines Straβenabschnitts, z.B. eines Tunnels oder einer Mautstraße, oder eines Orts, z.B. eines mautpflichtigen Parkplatzes oder Ortsgebiets, von großer Bedeutung. Vor Tunnels sollen zu hohe oder zu breite Fahrzeuge rechtzeitig angehalten werden, und in Straßenmautsystemen oder auf Parkplätzen sollen Nutzungsentgelte in Abhängigkeit von Fahrzeughöhe und/oder -breite bestimmt werden. Die Vermessung eines Fahrzeugs soll dabei möglichst ohne Störung des Fließverkehrs, also während der Fahrt auf der Fahrbahn erfolgen. Zu diesem Zweck werden beispielsweise quer über die Fahrbahn verlaufende Messportale errichtet und mit Sensoren zur Fahrzeugvermessung bestückt.

Verfügt die Fahrbahn über nur einen Fahrstreifen, so kann z.B. eine Fahrzeughöhe mittels auf unterschiedlicher Höhe querstrahlender Lichtschranken ermittelt werden. Alternativ kann von einem Fahrzeug zunächst eine Bildaufnahme gemacht werden und das Fahrzeug hierauf mittels optischer Bildauswertung vermessen werden. Aus der US 6,304,321 B1 ist ein auf einem Messportal montierter Laserscanner bekannt, der mittels eines rotierenden Ablenkspiegels mit unterschiedlich geneigten Spiegelflächen zwei unterschiedlich geneigte Abtastfächer auf die Fahrbahn- bzw. Fahrzeugoberfläche projizieren kann. Durch die Auffächerung der Lasermessstrahlen kommt es zu Abschattungseffekten, so dass die dem Scanner abgewandten Seitenflächen eines Fahrzeugs nicht erfasst und somit nicht vermessen werden können.

Aus der US 2004/0008514 A1 ist es bekannt, auf einem Messportal eine Zeile einzelner senkrecht nach unten strahlender Sende- und Empfangselemente zur Laserlaufzeitmessung zu montieren. Um einander nicht zu stören, werden die Sendeempfangselemente einzeln oder gruppenweise sequenziell angesteuert, was bei schnellfahrenden Fahrzeugen zu Erfassungslücken führen kann; eine sichere Zuordnung verschiedener Fahrzeugteile bzw. Anhänger zu einem Fahrzeug ist damit nicht möglich.

Die Erfindung setzt sich zum Ziel, eine Vorrichtung zum Vermessen eines Fahrzeugs zu schaffen, die die Nachteile des Standes der Technik überwindet und dabei flexibel einsetzbar ist.

Dieses Ziel wird mit einer Vorrichtung zur Vermessung eines Fahrzeugs erreicht, mit
einer Trägerstruktur, die eine quer über die Fahrbahn ausrichtbare Tragachse hat,
einer Vielzahl von Sendeelementen, die an der Trägerstruktur entlang der Tragachse verteilt montiert sind und jeweils einen Lichtmessstrahl in einer normal zur Tragachse verlaufenden Ausstrahlrichtung nach unten aussenden,
zumindest einem an der Trägerstruktur montierten Empfangselement, welches reflektierte Lichtmessstrahlen empfängt, und
einer an die Sende- und Empfangselemente angeschlossenen Auswerteeinheit zur Lichtlaufzeitmessung und daraus Vermessung eines Fahrzeugs,
welche Vorrichtung sich dadurch auszeichnet, dass die Ausstrahlrichtungen zumindest zweier Sendeelemente zueinander nicht-parallel sind.

Die Lichtmessstrahlen bilden gemeinsam auf der Fahrbahn einen zweidimensionalen Messbereich und sind dabei dennoch stets in fahrtrichtungsparallelen Ebenen ausgerichtet, sodass sie ein Fahrzeugs ohne seitliche Abschattungseffekte dreidimensional vermessen können. Die Strahlabstände quer zur Fahrtrichtung können dabei in verschiedenen Ausstrahlrichtungen voneinander völlig unabhängig gewählt werden, wodurch je nach Bedarf Sende- und/oder Empfangselemente und damit zusätzlich auch Rechenleistung bei der Auswertung gespart werden kann. Durch das Optimieren der Anordnung und der Anzahlen von Sende- und Empfangselementen wird die Trägerstruktur entlastet, sodass auch eine einseitige Abstützung des folglich schlanken, über die Fahrbahn ragenden Teils der Trägerstruktur möglich wird. So kann er, z.B. für Wartungsarbeiten, auch schwenkbar ausgeführt werden.

Um die Auswertung der Messsignale zu vereinfachen, ist es vorteilhaft, wenn Sendeelemente mit zueinander parallelen Ausstrahlrichtungen eine Gruppe bilden und die Vorrichtung zumindest zwei Gruppen hat. Solche Gruppen paralleler Lichtmessstrahlen bilden gemeinsam quer über die Fahrbahn verlaufende Abtastzeilen und können gemeinsam oder im Hinblick auf eine spezifische Aufgabenstellung ausgewertet werden. So könnten anhand einer Detektion eines Fahrzeugs mithilfe einer ersten Gruppe zusätzliche Komponenten, z.B. Verkehrskameras, gesteuert oder die Lichtmessstrahlen einer zweiten Gruppe in ihrer zeitlichen Abfolge beeinflusst werden. Dadurch kann z.B. Energie und/oder Rechenleistung in verkehrsarmen Zeiten eingespart werden.

Besonders bevorzugt haben die Sendeelemente einer ersten Gruppe regelmäßige erste gegenseitige Abstände und die Sendeelemente einer zweiten Gruppe davon verschiedene regelmäßige zweite gegenseitige Abstände. Die gegenseitigen Abstände der Lichtmessstrahlen werden so an unterschiedliche Aufgabenstellungen angepasst, die verschiedene Auflösungen erfordern; ihre Regelmäßigkeit vereinfacht die Ausrichtung der Vermessungsvorrichtung und die Auswertung.

Um im gesamten zweidimensionalen Messbereich ein Fahrzeug lückenlos verfolgen zu können, zeichnet sich eine bevorzugte Ausführungsform der Erfindung durch eine erste Gruppe von eng beabstandeten Sendeelementen mit senkrechten Ausstrahlrichtungen, zumindest eine zweite Gruppe von weit beabstandeten Sendeelementen mit Ausstrahlrichtungen in einem ersten Winkel zur Senkrechten, und zumindest eine dritte Gruppe von eng beabstandeten Sendeelementen mit Ausstrahlrichtungen in einem zweiten Winkel zur Senkrechten aus. Jede Gruppe von Sendeelementen kann dabei einer bestimmten Aufgabe dienen: Die Auswerteeinrichtung ist besonders bevorzugt dazu ausgebildet, die Reflexionen der Lichtmessstrahlen der ersten Gruppe zur Fahrzeugklassifikation, jene der zweiten Gruppe zur Fahrzeugverfolgung und jene der dritten Gruppe zur Fahrzeugdetektion auszuwerten. Bei Detektion eines Fahrzeugs mit der dritten Gruppe kann so beispielsweise eine Bildaufnahme des Fahrzeugkennzeichens ausgelöst werden, woraufhin das Fahrzeug mit Lichtmessstrahlen der zweiten Gruppe - in geringerer Auflösung über eine größere Fahrtstrecke - lückenlos bis hin zu Lichtmessstrahlen der ersten Gruppe weiterverfolgt werden kann, welche eng gesetzt sind und mit senkrechter Ausstrahlrichtung besonders gut empfangbare Reflexionen bieten, sodass die Fahrzeugklassifikation hochpräzise ausgeführt werden kann. Dank der lückenlosen Verfolgung des Fahrzeugs durch den gesamten zweidimensionalen Messbereich ist die Verknüpfung von Fahrzeugkennzeichen und Vermessungs- bzw. Klassifikationsergebnis fehlersicher.

Alternativ (oder ergänzend) kann auch nach einer Fahrzeugklassifikation mit der ersten Gruppe das Fahrzeug mit Hilfe von nachgeordneten zweiten Gruppen bis zu einer (neuerlichen) Detektion und einer (weiteren) dritten Gruppe verfolgt und hierauf, wenn gewünscht, eine (nochmalige) Bildaufnahme ausgelöst werden, zum Beispiel für Front- und Heckfotos desselben Fahrzeugs und seiner Nummerntafel.

Besonders vorteilhaft ist es, wenn jedem Sendeelement auf der Trägerstruktur ein eigenes Empfangselement in unmittelbarer Nähe zugeordnet ist. Dies ermöglicht eine vereinfachte Zuordnung bei der Auswertung der einzelnen reflektierten Lichtmessstrahlen und vereinfacht auch die Ausrichtung der Sende- und Empfangselemente. Ferner wird dadurch erleichtert, dass mehrere oder alle Sendeelemente simultan Lichtmessstrahlen aussenden, welche von den jeweils zugeordneten Empfangselementen empfangen und mit Hilfe der Auswerteeinrichtung hinsichtlich der Lichtlaufzeit ausgewertet werden.

Um den störenden Einfluss von Streulicht zu reduzieren, wird bevorzugt jedem Empfangselement eine Gesichtsfeldblende vorgeordnet. Neben einer Verringerung der Störanfälligkeit gegenüber Umwelteinflüssen werden so auch Reflexionen der Lichtmessstrahlen benachbarter Sendeelemente ausgeblendet, was den simultanen Betrieb mehrerer oder aller Sendeelemente erlaubt.

In einer vorteilhaften Variante zeichnet sich die Vorrichtung dadurch aus, dass jedes Sendeelement durch die Ausmündung einer lichtleitenden Faser gebildet ist, welche von einer Lichtquelle gespeist ist. Durch das geringe Gewicht der Fasern wird eine besonders schlanke und leichte Trägerstruktur erreicht, sodass eine rasche Montage und Wartung erleichtert und die optische Beeinträchtigung der Umwelt reduziert wird.

Besonders bevorzugt gehen die lichtleitenden Fasern von einem zentralen Ort in der Vorrichtung aus, an dem für eine oder mehrere lichtleitende Fasern jeweils eine Lichtquelle angeordnet ist. Dadurch können Lichtquellen eingespart und die verbleibende(n), wenn nötig, zentral gewartet werden. Der simultane Betrieb mehrerer oder sogar aller Sendeelemente ist zugleich sichergestellt. Auch können die lichtleitenden Fasern aus der Trägerstruktur herausgeführt und z.B. in einen damit verbundenen Schaltkasten der Vorrichtung ausgelagert werden, wodurch sie noch einfacher zugänglich sind.

Günstig ist es, wenn jedes Empfangselement durch die Einmündung einer lichtleitenden Faser gebildet ist, welche einem optoelektrischen Wandler zugeführt ist. Ähnlich der vorgenannten Variante reduziert dies das Gewicht entlang der Tragachse. Zugleich ermöglicht eine solche Ausführungsform die zentrale Auswertung der reflektierten Lichtmessstrahlen direkt anhand der optischen Signale.

Besonders bevorzugt ist bei einer solchen zentralen Auswertung der optoelektrische Wandler ein Bildsensor, auf dessen Pixel jeweils eine der lichtleitenden Fasern geführt ist. Ein solcher zur Lichtlaufzeitmessung geeigneter Bildsensor kann auch simultan ausgesendete Lichtmessstrahlen bzw. deren Reflexionen in Hinblick auf ihre Laufzeit punktgenau erfassen und zuordnen und dabei einzelne Abstände ermitteln. Der Bildsensor kann wieder an einem zentralen Ort, z.B. im Schaltkasten an der Trägerstruktur, sitzen.

In einer alternativen Variante sind die Sendeelemente Leuchtdioden (LEDs) oder Laserdioden und die Empfangselemente optoelektrische Wandler, welche an der Trägerstruktur nach auβen freiliegen. Dies reduziert den Aufwand für eine zentrale Ansteuerung und Auswertung, da in diesem Fall Sende- und Empfangselemente rein elektrische Signale benötigen bzw. zur Verfügung stellen. Eine gemischte Ausführungsform, z.B. mit dezentralen Leucht- bzw. Laserdioden als Sendeelementen und Einmündungen lichtleitender Fasern als Empfangselementen mit zentralem Bildsensor, oder umgekehrt mit zentralen Leucht- oder Laserdioden und Ausmündungen lichtleitender Fasern als Sendeelementen und dezentralen optoelektrischen Wandlern, z.B. Fotodioden, wäre ebenso möglich. Aufgrund der geringen Baugröße heutiger Leucht-, Laser- und Fotodioden bleibt dabei eine schlanke Trägerstruktur erhalten.

Die Trägerstruktur kann besonders vorteilhaft als standardisiertes Modul aufgebaut werden, das nach Wunsch mit Sende- und Empfangselementen bestückt wird, indem die Trägerstruktur eine Vielzahl vorbereiteter Aufnahmen für jeweils ein Sende- und/oder Empfangselement hat, welche Aufnahmen rasterförmig über eine nach unten gerichtete Seite der Trägerstruktur verteilt sind. Je nach Bestückung der vorbereitenden Aufnahmen sind so auf einfache Weise in verschiedenen Ausstrahlrichtungen unterschiedliche gegenseitige Abstände der Sende- und/oder Empfangselemente und somit eine Anpassung an verschiedene Umgebungsbedingungen und Aufgabenstellungen erzielbar. Auch können die einzelnen Aufnahmen bereits für vorbestimmte Ausstrahlrichtungen vorbereitet sein und/oder den Empfangselementen ein vorbereitetes Gesichtsfeld zuweisen.

So ist es beispielsweise besonders günstig, wenn die Aufnahmen Cliphalter für das Einstecken von Leucht-, Laserdioden und/oder optoelektrischen Wandlern sind. Dies ermöglicht eine rasche Montage bzw. Demontage der genannten Komponenten bei weiterhin beliebiger Bestückung. Die dabei mögliche geringe Wandstärke der Trägerstruktur verringert ihr Gewicht.

Alternativ sind die Aufnahmen bevorzugt eine Wandung der Trägerstruktur durchsetzende Schächte für den Durchtritt von lichtleitenden Fasern. Solche Schächte können angesichts der geringen Faserdurchmesser ebenfalls sehr schmal sein und begünstigen dabei das rasche Einsetzen der Fasern.

Besonders vorteilhaft ist es, wenn die äußeren Abschnitte der Aufnahmen als Gesichtsfeldblenden ausgebildet sind. Dabei kann es sich um einen Bereich geringeren Durchmessers der genannten Schächte handeln oder um einen an den Cliphalterungen ausgebildeten Teil der Aufnahmen, wodurch separate Bauteile entfallen.

Die Erfindung wird nachfolgend anhand von in den beigeschlossenen Zeichnungen dargestellten Ausführungsbeispielen näher erläutert. In den Zeichnungen zeigt:
Fig. 1 die erfindungsgemäße Vorrichtung zur Vermessung eines Fahrzeugs auf einer Fahrbahn in einer Perspektivansicht von oben;
Fig. 2 ein Fahrzeug auf einer Fahrbahn und davon reflektierte Lichtmessstrahlen, welche von einer Vorrichtung nach Fig. 1 ausgesendet werden, in einer Draufsicht;
Fig. 3 den quer über die Fahrbahn verlaufenden Messkopf der Vorrichtung von Fig. 1 in einer Ansicht von unten; und
Fig. 4 verschiedene Ausführungsformen des Messkopfes von Fig. 3 in Teilquerschnitten entlang der Schnittlinie A-A von Fig. 3.

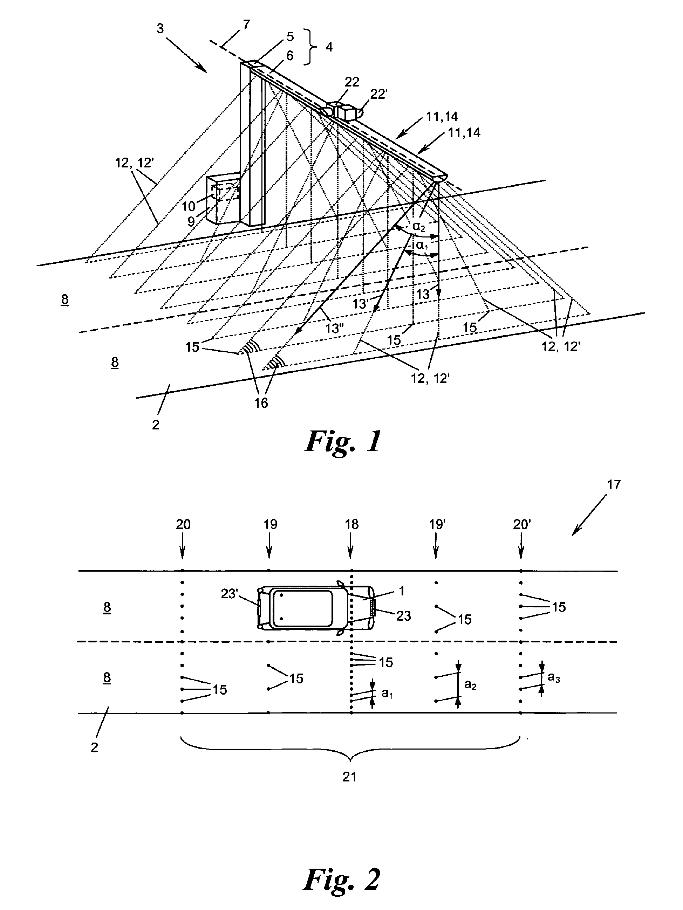

Gemäß den Fig. 1 und 2 wird ein Fahrzeug 1 während seiner Fahrt auf einer Fahrbahn 2 mit Hilfe einer Vorrichtung 3 zumindest in Bezug auf seine Breite und Höhe vermessen. Die Vermessungsvorrichtung 3 hat eine Trägerstruktur 4 mit zumindest einer Stütze 5 und einem von dieser abgestützten langgestreckten Messkopf 6, welcher eine quer über die Fahrbahn 2 verlaufende Tragachse 7 bildet. Je nach Breite der Fahrbahn 2 bzw. Anzahl ihrer Fahrstreifen 8 kann die Trägerstruktur 4 auch weitere Stützen 5 aufweisen. Der Messkopf 6 kann an der Stütze 5 um eine vertikale Achse schwenkbar gelagert sein, sodass er zu Wartungszwecken von der Fahrbahn 2 weggeschwenkt werden kann. Die Vorrichtung 3 weist ferner einen Schaltkasten 9 zur Aufnahme einer Auswerteeinheit 10 sowie weiterer Komponenten auf.

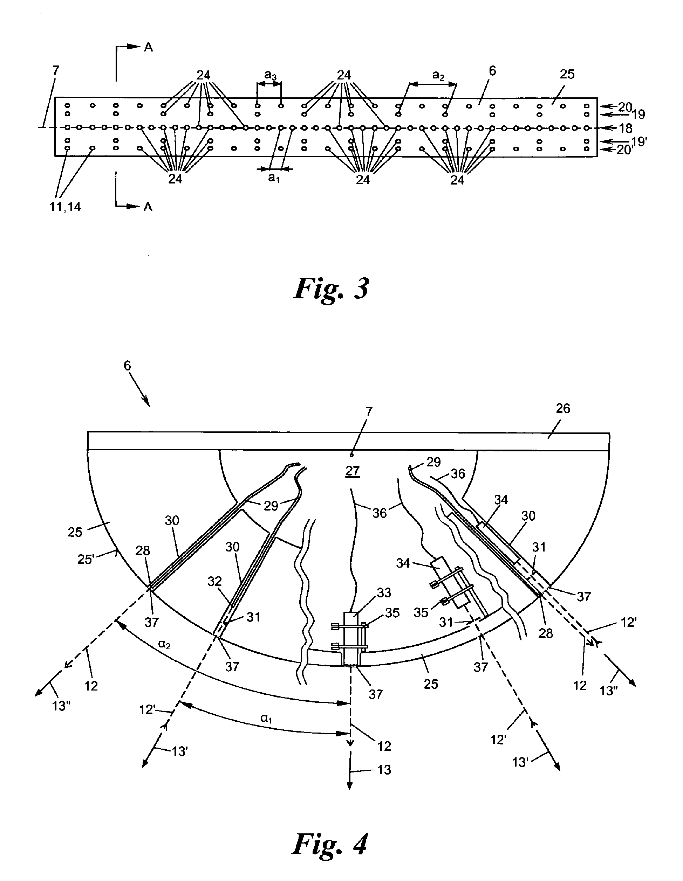

Am Messkopf 6 ist eine Vielzahl von Sendeelementen 11 entlang der Tragachse 7 verteilt montiert (Fig. 3). Jedes Sendeelement 11 sendet einen Lichtmessstrahl 12, z.B. Laserstrahl, in einer Ausstrahlrichtung 13, 13', 13" nach unten auf die Fahrbahn 2 bzw. ein darauf befindliches Fahrzeug 1 aus (Fig. 4). Der Messkopf 6 trägt ferner zumindest ein Empfangselement 14 für vom Fahrzeug 1 bzw. der Fahrbahn 2 reflektierte Lichtmessstrahlen 12'. Es kann ein Empfangselement 14 für alle Sendeelemente 11 oder für jeweils eine Gruppe von Sendeelementen 11 vorgesehen werden, oder ein eigenes Empfangselement 14 für jedes Sendeelement 11.

Die Auswerteeinheit 10 ist an die Sende- und Empfangselemente 11, 14 angeschlossen und berechnet aus der Laufzeit jedes einzelnen ausgesendeten und reflektierten Lichtmessstrahls 12, 12', z.B. dem Zeitraum zwischen dem Aussenden eines Lichtimpulses von einem Sendeelement 11 und dem Empfangen des reflektierten Lichtimpulses in einem Empfangselement 14, und den vorbekannten Positionen der Sende- und Empfangselemente 11, 14 die Positionen der Auftreffpunkte 15 der Lichtmessstrahlen 12 auf der Fahrbahn 2 bzw. dem Fahrzeug 1 , um daraus ein punktweises 2.5D- bzw. 3D-Abbild (eine "Abtastpunktewolke") der Fahrbahn 2 bzw. des Fahrzeugs 1 zu erstellen, wie in der Technik an sich bekannt.

Wie in den Fig. 1 und 4 gezeigt, sind die Ausstrahlrichtungen 13, 13', 13" zumindest zweier Sendeelemente 11 und damit deren Lichtmessstrahlen 12 zueinander nicht-parallel. Dabei liegt jeder Lichtmessstrahl 12 in einer zur Tragachse 7 normalen, die Fahrbahn 2 etwa parallel zu den Fahrstreifen 8 schneidenden Ebene 16. Lichtmessstrahlen 12 mit nicht-parallelen Ausstrahlrichtungen 13, 13', 13" können dabei in ein und derselben oder in verschiedenen Ebenen 16 liegen. Die Vorrichtung 3 wirft damit ein zweidimensionales Muster 17 von Auftreffpunkten 15 auf die Fahrbahn 2 bzw. das Fahrzeug 1, siehe Fig. 2.

In dem Muster 17 bilden Lichtmessstrahlen 12 mit zueinander parallelen Ausstrahlrichtungen 13, 13', 13" jeweils eine Gruppe 18, 19, 19', 20, 20' (Fig. 2), wozu die Sende- und Empfangselemente 11, 14 bevorzugt in dementsprechenden Gruppen 18, 19, 19', 20, 20' angeordnet sind (Fig. 3). In der gezeigten bevorzugten Ausführungsform haben die Sendeelemente 11 einer ersten Gruppe 18 mit senkrechten Ausstrahlrichtungen 13 regelmäβige enge erste gegenseitige Abstände a₁, jene von zweiten Gruppen 19, 19' mit Ausstrahlrichtungen 13' in ersten Winkeln α₁ (0 < α₁ < 90°) zur Senkrechten (α = 0) regelmäßige weite zweite gegenseitige Abstände a₂, und jene von dritten Gruppen 20, 20' mit Ausstrahlrichtung 13" in zweiten Winkeln α₂ (α₁ < α₂ < 90°) zur Senkrechten regelmäßige enge dritte gegenseitige Abstände a₃. Es können auch mehr als eine zweite Gruppe 19, 19' zwischen der zentralen ersten Gruppe 18 und den äußeren dritten Gruppen 20, 20' vorgesehen werden.

Die Auswerteeinheit 10 ist bevorzugt dazu ausgebildet, die Reflexionen 12' der Lichtmessstrahlen 12 der ersten Gruppe 18 zur Fahrzeugvermessung und -klassifikation, jene der zweiten Gruppen 19, 19' zur Fahrzeugverfolgung (Tracking) über den gesamten Messbereich 21 des Musters 17 und jene der dritten Gruppen 20, 20' zur Fahrzeugdetektion (Triggering) beim Ein- und Austritt eines Fahrzeugs 1 in den bzw. aus dem Messbereich 21 auszuwerten. Insbesondere die äußeren (dritten) Gruppen 20, 20' können als Liniendetektoren verwendet werden, um z.B. eine Bildaufnahme einer an der Trägerstruktur 4 zu diesem Zweck montierten Kameraeinheit 22, 22' auszulösen und/oder die Pausenzeiten zwischen zwei Lichtimpulsen der Lichtmessstrahlen 12 von in Fahrtrichtung nachgeordneten Gruppen 18, 19, 19', 20, 20' zu reduzieren. Die Kameraeinheit 22, 22' erfasst dabei eine Vorder- oder Rückansicht des Fahrzeugs 1 mit vorderem oder rückwärtigem Kennzeichen 23, 23' und, wenn gewünscht, dem Fahrzeuglenker. Die gegenseitigen Abstände a₃ der dritten Gruppen 20, 20' sind dabei so gewählt, dass ein Fahrzeug 1 sicher und gegebenenfalls auch fahrstreifengenau detektiert wird, um beispielsweise eine auf den richtigen Fahrstreifen 8 gerichtete Kameraeinheit 22, 22' auszulösen. Der Messbereich 21 des Musters 17 in Längsrichtung der Fahrbahn 2 ist bevorzugt größer als das längste zu erwartende Fahrzeug 1, das vermessen bzw. klassifiziert werden soll, besonders bevorzugt ein Mehrfaches davon.

Selbstverständlich sind auch andere Anordnungen bzw. Abfolgen der Gruppen 18, 19, 19', 20, 20' zur Fahrzeugdetektion, -verfolgung und -klassifikation (Vermessung) je nach Anwendung möglich. Ein einfacher Fall besteht z.B. aus zumindest zwei verschiedenen Gruppen mit unterschiedlichen Auflösungen in deren Sensor-Bereichen für die Abfolge Tracking-Triggering oder Triggering-Tracking, usw. Eine Kombination mit weiteren Sensoren, z.B. Mikrowellen-Funkgeräten zur Kommunikation mit einem im Fahrzeug mitgeführten Gerät zur Maut-Erfassung, sind ebenfalls möglich.

Anschließend wird das Fahrzeug 1 bevorzugt durch die besonders eng beabstandeten Sendeelemente 11 der ersten Gruppe 18 in Breite und Höhe vermessen bzw. bei der Passage der Gruppe 18 eine 2.5D- bzw. 3D-Abtastpunktewolke davon erstellt, um das Fahrzeug 1 z.B. zu klassifizieren. Der enge Abstand a₁ führt zu einer hohen Auflösung bei dieser Vermessung bzw. Klassifikation.

Zwischen den Detektorgruppen 20, 20' und der Vermessungs- und Klassifikationsgruppe 18 wird das Fahrzeug 1 beim Durchfahren des Messbereichs 21 von den Lichtmessstrahlen 12 der zweiten Gruppen 19, 19' ("Trackinggruppen") erfasst. Dies dient im vorliegenden Ausführungsbeispiel dazu, das Fahrzeug 1 im gesamten Messbereich 21 lückenlos zu verfolgen und so z.B. eine mithilfe der dritten Gruppen 20, 20' ausgelöste Bildaufnahme der Kameraeinheiten 22, 22' einem mithilfe der ersten Gruppe 18 vermessenen und klassifizierten Fahrzeug 1 eindeutig zuordnen zu können. Dazu reicht es aus, wenn die Sendeelemente 11 der zweiten Gruppen 19, 19' voneinander weit beabstandet sind (a₂ > a₁, a₂ > a₃).

Es versteht sich, dass die Abstände a₁, a₂, a₃ der Sendeelemente 11 der verschiedenen Gruppen 18, 19, 19', 20, 20' anders als im dargestellten Beispiel gewählt werden können. Auch können weitere Gruppen oder andere geeignete, auch unregelmäβige Muster 17 ausgestrahlt werden. Die Lichtmessstrahlen 12 können im sichtbaren Wellenlängenbereich liegen, sind jedoch im vorliegenden Beispiel unsichtbar, um eine Störung des Verkehrs zu vermeiden.

Die Messung der Länge des Fahrzeugs 1 bzw. die Skalierung seiner Abtastpunktewolke kann z.B. durch Verknüpfung der Auswertungen mehrerer Empfangselemente 14 verschiedener Gruppen 18, 19, 19', 20, 20' oder mit Hilfe einer zusätzlichen Geschwindigkeitsmessung des Fahrzeugs 1 erreicht werden. Eine solche Geschwindigkeitsmessung kann über separate Geschwindigkeitssensoren (nicht dargestellt) erfolgen, oder mittels Doppler-Messung mit Hilfe der in einem Winkel α₁, α₂ gegenüber der Senkrechten abstrahlenden Sendeelemente 11, oder anhand der Zeitspanne zwischen der Erkennung eines Fahrzeugs 1 mit Hilfe einer der Gruppen 18, 19, 19', 20, 20' und der Erkennung mithilfe einer nachgeordneten Gruppe.

Die Fig. 3 und 4 zeigen den opto-mechanischen Aufbau des Messkopfs 6 im Detail. Demgemäß weist der Messkopf 6 eine Vielzahl vorbereiteter Aufnahmen 24 für jeweils ein Sendeelement 11 und/oder ein Empfangselement 14 auf. Die Aufnahmen 24 sind rasterförmig über die nach unten gerichtete Seite 25' der Wandung 25 des Messkopfs 6 verteilt. Die in Fig. 1 und 2 dargestellten, gruppenweisen Ausstrahlrichtungen 13, 13', 13" können durch die Ausrichtungen der Aufnahmen 24 vordefiniert werden, siehe den etwa halbkreis- bzw. U-förmigen Querschnitt der Wandung 25 in Fig. 4, welche Wandung 25 gemeinsam mit einem oberen Schutzdeckel 26 gleichzeitig einen in Richtung der Tragachse 7 verlaufenden Kanal 27 bildet.

Die in Fig. 3 dargestellten Aufnahmen 24 bilden zeilenweise die Gruppen 18, 19, 19', 20, 20' von Sendeelementen 11. Es können jedoch auch mehr Aufnahmen 25 als notwendig - beispielsweise regelmäßig rasterförmig - vorgesehen werden, die dann je nach gewünschtem Muster 17 mit Sende- bzw. Empfangselementen 11, 14 bestückt werden. Der Messkopf 6 kann auch einen anderen Querschnitt als U-förmig haben, z.B. O-förmigen oder rechteckigen Querschnitt.

Fig. 4 zeigt verschiedene Varianten von Sende- und Empfangselementen 11, 14 nebeneinander in ein und derselben Zeichnung, welche Varianten in der Regel Alternativen darstellen, jedoch auch in derselben Vorrichtung 3 kombiniert werden können.

In einer ersten Variante, in Fig. 4 links gezeigten Variante kann ein Sendeelement 11 durch die Ausmündung 28 einer lichtleitenden Faser 29 gebildet sein. Dazu ist die Aufnahme 24 bevorzugt ein Schacht 30, der die Wandung 25 durchsetzt, sodass die lichtleitende Faser 29 bzw. der Lichtmessstrahl 12 hindurchtreten kann. Die lichtleitenden Fasern 29 können über den Kanal 27 zu einem zentralen Ort in der Vorrichtung 3, beispielsweise dem Schaltkasten 9, geführt sein, wo sie von einer gemeinsamen oder gruppenweisen oder jeweils einzelnen Lichtquelle (nicht dargestellt) gespeist werden.

Ebenso kann ein Empfangselement 14 durch die Einmündung 32 einer lichtleitenden Faser 29 gebildet sein, welche zu einem optoelektrischen Wandler (nicht dargestellt) geführt ist. Auch der optoelektrische Wandler kann zentral, z.B. im Schaltkasten 9, angeordnet sein. Beim optoelektrischen Wandler kann es sich um einen Bildsensor, z.B. ein Photodiodenarray-Chip, handeln, an dem jede der lichtleitenden Fasern 29 auf ein separates Pixel des Bildsensors geführt ist. Alternativ könnte jede lichtleitende Faser 29 eine eigene Photodiode speisen.

Der lichtleitenden Faser 29 des Empfangselements 14 kann eine Gesichtsfeldblende 31 vorgeordnet werden, welche das Gesichtsfeld des Empfangselements 14 derart einschränkt, dass es nur einen einzigen reflektierten Lichtmessstrahl 12', nämlich jenen seines zugeordneten Sendeelements 11, empfängt. So können benachbarte oder sogar alle Sendeelemente 11 simultan senden. Die Gesichtsfeldblende 31 kann eine separate Blende sein, welche gegebenenfalls mit einer zusätzlichen Optik versehen ist, oder einfach durch den geringen Durchmesser des Schachts 30 selbst gebildet sein, in welchem die Einmündung 32 der lichtleitenden Faser 29 zurückversetzt ist. Anstelle einer Einschränkung der Gesichtsfelder der Empfangselement 14 könnten alternativ alle - oder zumindest nahe beieinander liegende - Sendeelemente 11 sequenziell angesteuert bzw. betrieben werden, um eine Einstreuung von reflektierten Lichtmessstrahlen 12' nicht-zugeordneter Sendeelemente 11 in ein Empfangselement 14 zu vermeiden.

In einer zweiten, in Fig. 4 in der Mitte gezeigten Variante können zumindest einige der Sendeelemente 11 auch Leuchtdioden (LEDs) oder Laserdioden 33 und/oder zumindest einige der Empfangselemente 14 optoelektrische Wandler 34, z.B. Fotodioden, sein, welche an der Trägerstruktur 4 nach außen hin freiliegen, sodass die Lichtmessstrahlen 12, 12' ungehindert ausgestrahlt bzw. empfangen werden können. Die Aufnahmen 24 für Leucht-, Laser- bzw. Fotodioden 33, 34 können ebenfalls geeignet geformte, die Wandung 25 durchsetzende Schächte 30 sein oder bevorzugt Cliphalter 35, in welche die Leucht-, Laser- und/oder Fotodioden 33, 34 z.B. lösbar eingesteckt werden. Wieder können die äußeren Abschnitte der Aufnahmen 24, insbesondere jene der Empfangselemente 14, optional als Gesichtsfeldblenden 31 ausgebildet sein. Die Leucht-, Laser- und Fotodioden 33, 34 stehen in dieser Ausführungsform über elektrische Signalleitungen 36, welche z.B. in dem Kanal 27 geführt sind, mit der Auswerteeinheit 10 in Verbindung.

Es versteht sich, dass die Aufnahmen 24, egal ob als Cliphalter 35 oder als Schächte 30 ausgeführt, jeweils sowohl ein Sendeelement 11 als auch ein zugeordnetes Empfangselement 14 oder mehr als ein Sende- und/oder Empfangselement 11, 14 aufnehmen können, wie dies eine dritte, in Fig. 4 rechts dargestellte Variante veranschaulicht, in welcher eine lichtleitende Faser 29 mit Ausmündung 28 als Sendeelement 11 und eine im selben Schacht 30 aufgenommenen Fotodiode 34 beispielhaft dargestellt ist. Jede andere Kombination bzw. Variation von Sende- und/oder Empfangselementen 11, 14 ist ebenso denkbar. Auch könnte ein und dieselbe lichtleitende Faser 29 sowohl als Sende- als auch als Empfangselement 11, 14 genutzt werden, wenn an ihrem der Aufnahme 24 entgegengesetzten Ende, z.B. über einen halbdurchlässigen Spiegel, sowohl ein Lichtmessstrahl 12 eingekoppelt als auch dessen Reflexion 12' ausgekoppelt wird. Eine solche Möglichkeit besteht auch für mehrere zusammengefasste lichtleitende Fasern 29, die gemeinsam gespeist und mit Hilfe eines Bildsensors ausgewertet werden.

Die Aufnahmen 24 können nach außen hin mit transparenten Abdeckplättchen 37 verschlossen und gegen Verschmutzung geschützt sein. Die Abdeckplättchen 37 können auch als Filter z.B. unerwünschte Lichtwellenlängen von den Empfangselementen 14 abhalten und/oder Polarisatoren sein, wobei einander zugeordneten Sende- und Empfangselementen 11, 14 gleichartig polarisierte Abdeckplättchen 37 vorgeordnet sind.

Die Erfindung ist nicht auf die dargestellten Ausführungsformen beschränkt, sondern umfasst alle Varianten, Kombinationen und Modifikationen, die in den Rahmen der angeschlossenen Ansprüche fallen.

## Patentansprüche

1. Vorrichtung (3) zur Vermessung eines Fahrzeugs (1) auf einer Fahrbahn (2), mit
einer Trägerstruktur (4), die eine quer über die Fahrbahn (2) ausrichtbare Tragachse (7) hat,
einer Vielzahl von Sendeelementen (11), die an der Trägerstruktur (4) entlang der Tragachse (7) verteilt montiert sind und jeweils einen Lichtmessstrahl (12) nach unten aussenden, wobei jeder Lichtmessstrahl (12) in einer normal zur Tragachse (7) verlaufenden Ausstrahlrichtung (13, 13', 13") liegt,
zumindest einem an der Trägerstruktur (4) montierten Empfangselement (14), welches reflektierte Lichtmessstrahlen (12') empfängt, und
einer an die Sende- und Empfangselemente (11, 14) angeschlossenen Auswerteeinheit (10) zur Lichtlaufzeitmessung und daraus Vermessung eines Fahrzeugs (1),
**dadurch gekennzeichnet,**
**dass** die Ausstrahlrichtungen (13, 13', 13") zumindest zweier Sendeelemente (11) zueinander nicht-parallel sind.

2. Vorrichtung nach Anspruch 1, **dadurch gekennzeichnet, dass** Sendeelemente (11) mit zueinander parallelen Ausstrahlrichtungen (13, 13', 13") eine Gruppe (18, 19, 19', 20, 20') bilden und die Vorrichtung (3) zumindest zwei Gruppen (18, 19, 19', 20, 20') hat.

3. Vorrichtung nach Anspruch 2, **dadurch gekennzeichnet, dass** die Sendeelemente (11) einer ersten Gruppe (18) regelmäβige erste gegenseitige Abstände (a₁) und die Sendeelemente (11) einer zweiten Gruppe (19, 19') davon verschiedene regelmäβige zweite gegenseitige Abstände (a₂) haben.

4. Vorrichtung nach Anspruch 2 oder 3, **gekennzeichnet durch** eine erste Gruppe (18) von eng beabstandeten Sendeelementen (11) mit senkrechten Ausstrahlrichtungen (13), zumindest eine zweite Gruppe (19, 19') von weit beabstandeten Sendeelementen (11) mit Ausstrahlrichtungen (13') in einem ersten Winkel (α₁) zur Senkrechten, und zumindest eine dritte Gruppe (20, 20') von eng beabstandeten Sendeelementen (11) mit Ausstrahlrichtungen (13") in einem zweiten Winkel (α₂) zur Senkrechten.

5. Vorrichtung nach Anspruch 4, **dadurch gekennzeichnet, dass** die Auswerteeinrichtung (10) dazu ausgebildet ist, die Reflexionen (12') der Lichtmessstrahlen (12) der ersten Gruppe (18) zur Fahrzeugklassifikation, jene der zweiten Gruppe (19, 19') zur Fahrzeugverfolgung und jene der dritten Gruppe (20, 20') zur Fahrzeugdetektion auszuwerten.

6. Vorrichtung nach einem der Ansprüche 1 bis 5, **dadurch gekennzeichnet, dass** jedem Sendeelement (11) ein eigenes Empfangselement (14) in unmittelbarer Nähe zugeordnet ist.

7. Vorrichtung nach einem der Ansprüche 1 bis 6, **dadurch gekennzeichnet, dass** jedem Empfangselement (14) eine Gesichtsfeldblende (31) vorgeordnet ist.

8. Vorrichtung nach einem der Ansprüche 1 bis 7, **dadurch gekennzeichnet, dass** jedes Sendeelement (11) durch die Ausmündung (28) einer lichtleitenden Faser (29) gebildet ist, welche von einer Lichtquelle gespeist ist.

9. Vorrichtung nach Anspruch 8, **dadurch gekennzeichnet, dass** die lichtleitenden Fasern (29) von einem zentralen Ort (10) in der Vorrichtung (3) ausgehen, an dem für eine oder mehrere lichtleitende Fasern (29) jeweils eine Lichtquelle angeordnet ist.

10. Vorrichtung nach einem der Ansprüche 1 bis 9, **dadurch gekennzeichnet, dass** jedes Empfangselement (14) durch die Einmündung (32) einer lichtleitenden Faser (29) gebildet ist, welche zu einem optoelektrischen Wandler geführt ist.

11. Vorrichtung nach Anspruch 10, **dadurch gekennzeichnet, dass** der optoelektrische Wandler ein Bildsensor ist, auf dessen Pixel jeweils eine der lichtleitenden Fasern (29) geführt ist.

12. Vorrichtung nach einem der Ansprüche 1 bis 7, **dadurch gekennzeichnet, dass** die Sendeelemente (11) Leucht- oder Laserdioden (33) und die Empfangselemente (14) optoelektrische Wandler (34) sind, welche an der Trägerstruktur (4) nach außen freiliegen.

13. Vorrichtung nach einem der Ansprüche 1 bis 12, **dadurch gekennzeichnet, dass** die Trägerstruktur (4) eine Vielzahl vorbereiteter Aufnahmen (24) für jeweils ein Sende- und/oder Empfangselement (11, 14) hat, welche Aufnahmen (24) rasterförmig über eine nach unten gerichtete Seite (25') der Trägerstruktur (4) verteilt sind.

14. Vorrichtung nach Anspruch 13 in Verbindung mit Anspruch 12, **dadurch gekennzeichnet, dass** die Aufnahmen (24) Cliphalter (35) für das Einstecken der Leucht- bzw. Laserdioden (33) und/oder optoelektrischen Wandler (34) sind.

15. Vorrichtung nach Anspruch 13 in Verbindung mit einem der Ansprüche 8 bis 11, **dadurch gekennzeichnet, dass** die Aufnahmen (24) eine Wandung (25) der Trägerstruktur (4) durchsetzende Schächte (30) für den Durchtritt der lichtleitenden Fasern (29) sind.

16. Vorrichtung nach einem der Ansprüche 13 bis 15, **dadurch gekennzeichnet, dass** die äußeren Abschnitte der Aufnahmen (24) als Gesichtsfeldblenden (31) ausgebildet sind.

## Claims

1. A device (3) for measuring a vehicle (1) on a roadway (2), comprising:
a carrier structure (4), which has a support axis (7) that can be oriented transversely over the roadway (2),
a plurality of transmitter elements (11), which are distributed along the support axis (7) on the carrier structure (4) and each downwardly emit a light measuring beam (12), wherein each light measuring beam (12) lies in an emission direction (13, 13', 13") that is normal to the support axis (7),
at least one receiver element (14), which is installed on the carrier structure (4) and receives reflected light measuring beams (12'), and
an evaluation unit (10), which is connected to the transmitter and receiver elements (11, 14) for time of flight measurement and, based thereon, measurement of a vehicle (1),
**characterized in that**
the emission directions (13, 13', 13") of at least two transmitter elements (11) are not parallel to each other.

2. The device according to claim 1, **characterized in that** transmitter elements (11) having mutually parallel emission directions (13, 13', 13") form a group (18, 19, 19', 20, 20'), and that the device (3) has at least two groups (18, 19, 19', 20, 20').

3. The device according to claim 2, **characterized in that** the transmitter elements (11) of a first group (18) have regular first distances (a₁) from each other, and the transmitter elements (11) of a second group (19, 19') have regular second distances (a₂) from each other that are different from the first.

4. The device according to claim 2 or 3, **characterized by** a first group (18) of closely spaced transmitter elements (11) having vertical emission directions (13), at least one second group (19, 19') of transmitter elements (11) spaced far apart from each other having emission directions (13') at a first angle (α₁) relative to the perpendicular, and at least one third group (20, 20') of closely spaced transmitter elements (11) having emission directions (13") at a second angle (α₂) relative to the perpendicular.

5. The device according to claim 4, **characterized in that** the evaluation unit (10) is configured to evaluate the reflections (12') of the light measuring beams (12) of the first group (18) for vehicle classification, those of the second group (19, 19') for vehicle tracking, and those of the third group (20, 20') for vehicle detection.

6. The device according to any one of claims 1 to 5, **characterized in that** a dedicated receiver element (14) is associated with each transmitter element (11) in the immediate vicinity thereof.

7. The device according to any one of claims 1 to 6, **characterized in that** an aperture (31) is provided upstream of each receiver element (14).

8. The device according to any one of claims 1 to 7, **characterized in that** each transmitter element (11) is formed by the outlet end (28) of a light conducting fiber (29), which is fed by a light source.

9. The device according to claim 8, **characterized in that** the light conducting fibers (29) originate from a central location (10) in the device (3), at which a light source is arranged for each of one or more light conducting fibers (29).

10. The device according to any one of claims 1 to 9, **characterized in that** each receiver element (14) is formed by the inlet end (32) of a light conducting fiber (29), which is routed to an optoelectronic transducer.

11. The device according to claim 10, **characterized in that** the optoelectronic transducer is an image sensor, on each pixel of which one of the light conducting fibers (29) is routed.

12. The device according to any one of claims 1 to 7, **characterized in that** the transmitter elements (11) are light-emitting or laser diodes (33), and the receiver elements (14) are optoelectronic transducers (34), which are exposed to the outside on the carrier structure (4).

13. The device according to any one of claims 1 to 12, **characterized in that** the carrier structure (4) has a plurality of prepared seats (24), in each case for a transmitter and/or receiver element (11, 14), the seats (24) being distributed in a grid-shaped manner across a downwardly facing side (25') of the carrier structure (4).

14. The device according to claim 13 in conjunction with claim 12, **characterized in that** the seats (24) are clip holders (35) for inserting the light-emitting or laser diodes (33) and/or the optoelectronic transducers (34).

15. The device according to claim 13 in conjunction with any one of claims 8 to 11, **characterized in that** the seats (24) are ducts (30) penetrating a wall (25) of the carrier structure (4) for the light guiding fibers (29) to pass through.

16. The device according to any one of claims 13 to 15, **characterized in that** the outer sections of the seats (24) are configured as apertures (31).

## Revendications

1. Dispositif (3) pour la mesure d'un véhicule (1) sur une chaussée (2), avec
une structure de support (4) comportant un axe de support (7) apte à être orienté transversalement par-dessus la structure de support (2),
une multitude d'éléments émetteurs (11) montés sur la structure de support (4) de façon à être répartis le long de l'axe de support (7) et émettant respectivement un faisceau de mesure lumineux (12) vers le bas, chaque faisceau de mesure lumineux (12) s'étendant dans une direction d'émission (13, 13', 13") normale par rapport à l'axe de support (7),
au moins un élément récepteur (14) monté sur la structure de support (4), lequel reçoit des faisceaux de mesure lumineux réfléchis (12'), et
une unité d'évaluation (10) raccordée aux éléments émetteurs et récepteurs (11, 14), pour la mesure du temps de propagation de la lumière et pour la mesure d'un véhicule (1) sur la base de laquelle mesure,
**caractérisé en ce que**
les directions d'émission (13, 13', 13") d'au moins deux éléments émetteurs (11) ne sont pas parallèles entre elles.

2. Dispositif selon la revendication 1, **caractérisé en ce que** des éléments émetteurs (11) avec des directions d'émission (13, 13', 13") parallèles entre elles forment un groupe (18, 19, 19', 20, 20') et le dispositif (3) comporte au moins deux groupes (18, 19, 19', 20, 20').

3. Dispositif selon la revendication 2, **caractérisé en ce que** les éléments émetteurs (11) d'un premier groupe (18) présentent des premiers espacements mutuels réguliers (a₁), et les éléments émetteurs (11) d'un deuxième groupe (19, 19') présentent des deuxièmes espacements mutuels réguliers (a₂) différents des premiers.

4. Dispositif selon la revendication 2 ou 3, **caractérisé par** un premier groupe (18) d'éléments émetteurs (11) présentant un espacement étroit avec des directions d'émission verticales (13), au moins un deuxième groupe (19, 19') d'éléments émetteurs (11) présentant un espacement large avec des directions d'émission (13') s'étendant sous un premier angle (α₁) par rapport à la verticale, et au moins un troisième groupe (20, 20') d'éléments émetteurs (11) présentant un espacement étroit avec des directions d'émission (13") s'étendant sous un deuxième angle (α₂) par rapport à la verticale.

5. Dispositif selon la revendication 4, **caractérisé en ce que** le dispositif d'évaluation (10) est conçu pour évaluer les réflexions (12') des faisceaux de mesure lumineux (12) du premier groupe (18) pour la classification du véhicule, celles du deuxième groupe (19, 19') pour le suivi du véhicule, et celles du troisième groupe (20, 20') pour la détection du véhicule.

6. Dispositif selon l'une des revendications 1 à 5, **caractérisé en ce qu'**un élément récepteur (14) propre est attribué à chaque élément émetteur (11), à proximité immédiate de celui-ci.

7. Dispositif selon l'une des revendications 1 à 6, **caractérisé en ce qu'**un limiteur de champ visuel (31) est placé devant chaque élément récepteur (14).

8. Dispositif selon l'une des revendications 1 à 7, **caractérisé en ce que** chaque élément émetteur (11) est formé par la sortie (28) d'une fibre transmettant la lumière (29), laquelle est alimentée par une source de lumière.

9. Dispositif selon la revendication 8, **caractérisé en ce que** les fibres (29) transmettant la lumière partent d'un point central (10) dans le dispositif (3), où se trouve respectivement une source de lumière pour une ou plusieurs fibres (29) transmettant la lumière.

10. Dispositif selon l'une des revendications 1 à 9, **caractérisé en ce que** chaque élément récepteur (14) est formé par l'entrée (32) d'une fibre (29) transmettant la lumière, laquelle est guidée vers un convertisseur optoélectrique.

11. Dispositif selon la revendication 10, **caractérisé en ce que** le convertisseur optoélectrique est un détecteur d'image, sur les pixels duquel est respectivement guidée l'une des fibres (29) transmettant la lumière.

12. Dispositif selon l'une des revendications 1 à 7, **caractérisé en ce que** les éléments émetteurs (11) sont des diodes électroluminescentes ou laser (33), et les éléments récepteurs (14) sont des convertisseurs optoélectriques (34) exposés vers l'extérieur sur la structure de support (4).

13. Dispositif selon l'une des revendications 1 à 12, **caractérisé en ce que** la structure de support (4) comporte une multitude d'admissions préparées (24) respectivement pour un élément émetteur et/ou récepteur (11, 14), lesdites admissions (24) étant répartis sous la forme d'une matrice sur une face (25') orientée vers le bas de la structure de support (4).

14. Dispositif selon la revendication 13 en association avec la revendication 12, **caractérisé en ce que** les admissions (24) sont des supports à clip (35) pour l'insertion des diodes électroluminescentes ou laser (33) et/ou des convertisseurs optoélectriques (34).

15. Dispositif selon la revendication 13 en association avec l'une des revendications 8 à 11, **caractérisé en ce que** les admissions (24) sont des puits (30) traversant une paroi (25) de la structure de support (4), pour le passage des fibres (29) transmettant la lumière.

16. Dispositif selon l'une des revendications 13 à 15, **caractérisé en ce que** les sections extérieures des admissions (24) sont conçues comme des limiteurs de champ visuel (31).
